# EUROPÄISCHE PATENTANMELDUNG

(11) **EP 2 654 120 A1**
(43) Veröffentlichungstag der Anmeldung: **23.10.2013**
(21) Anmeldenummer: 12164904.0
(22) Anmeldetag: 20.04.2012
(51) Int. Cl.: H01M 10/50

(54) **Vorrichtung zur Kühlung einer Fahrzeugbatterie**

(71) Anmelder: Magna E-Car Systems GmbH & Co OG, 8041 Graz (AT)
(72) Erfinder: Wünsche, Ralph, 8010 Graz (AT); Waha, Bernhard, 8075 Hart bei Graz (AT)
(74) Vertreter: Rausch, Gabriele

(57) **Zusammenfassung**

Vorrichtung zur Kühlung einer Fahrzeugbatterie mit Batteriezellen, umfassend einen Kühlkörper (1) mit Kühlkanälen (2) zur Durchströmung mit einem Kühlmittel, wobei der Kühlkörper (1) mit den Batteriezellen in thermischem Kontakt steht, so dass Wärme von den Batteriezellen auf den Kühlkörper (1) übertragbar ist, wobei an zumindest einem Ende des Kühlkörpers (1) ein Kühlmittelverteiler (3) vorgesehen ist, wobei zumindest einige der Kühlkanäle (2) des Kühlkörpers (1) in den Kühlmittelverteiler (3) münden, wobei der Kühlmittelverteiler (3) mit dem Kühlkörper (1) verklebt ist.

## Beschreibung

Die vorliegende Erfindung betrifft eine Vorrichtung zur Kühlung einer Fahrzeugbatterie mit Batteriezellen.

Derartige Vorrichtungen werden insbesondere für HV-Batteriesysteme in Elektro- und Hybridfahrzeugen eingesetzt. Aus derartigen Batteriesystemen wird in kurzen Zeitabschnitten eine hohe Energiemenge abgeführt bzw. durch Rekuperation auch wieder zugeführt. Durch den Innenwiderstand der Batteriezellen erwärmen sich diese dabei, wodurch unter anderem die Lebensdauer der Batteriezellen verringert wird. Daher ist eine Kühlung der Batteriezellen erforderlich. Zur Kühlung werden üblicherweise Kühlkörper verwendet, wobei Kanäle im Inneren des Kühlkörpers von einem Kühlmittel durchströmt werden. Die Batteriezellen des Batteriesystems oder beispielsweise eines Moduls des Batteriesystems sind so am Kühlkörper angeordnet, dass ein guter thermischer Kontakt zwischen den Zellen und dem Kühlkörper besteht und so Wärme gut von den Batteriezellen auf den Kühlkörper übertragbar ist. Ein Kühlmittelverteiler dient zur Einleitung und Ausleitung des Kühlmittels in bzw. aus den Kanälen des Kühlkörpers.

Eine Vorrichtung zur Kühlung einer Fahrzeugbatterie ist aus der DE 10 2008 027 293 A1 bekannt. Diese Vorrichtung umfasst einen Kühlkörper mit Kanälen zur Durchströmung mit einem Fluid, wobei elektrische Speicherelemente mit dem Kühlkörper in thermischem Kontakt stehen. Zur Verteilung des Fluids auf die Kanäle des Kühlkörpers ist endseitig am Kühlkörper ein Sammler vorgesehen. Die Verbindung zwischen Sammler und Kühlkörper wird durch Einstecken des Sammlers in Nuten des Kühlkörpers und nachfolgendes Verlöten in einem Lötofen hergestellt.

Aus der US 2011/0027640 A1 ist ein Batteriemodul bekannt mit einem extrudierten Gehäuse mit innenliegenden Kühlkanälen und einem Verteiler für das Kühlmedium, wobei der Verteiler mit dem Gehäuse verschweißt oder verlötet ist.

Die Herstellung einer Schweiß- oder Lötnaht ist mit einem hohen Fertigungsaufwand verbunden, da die Naht fluiddicht ausgeführt sein muss. Darüber hinaus kann sich durch den Wärmeeintrag beim Schweißen der Kühlkörper verziehen, so dass die Anbindung des Kühlkörpers an die Batteriezellen beeinträchtigt wird.

Es ist eine Aufgabe der Erfindung, eine Vorrichtung zur Kühlung einer Fahrzeugbatterie der genannten Art in dieser Hinsicht zu verbessern und insbesondere eine Vorrichtung zur Kühlung einer Fahrzeugbatterie anzugeben, mit einer fluiddichten Verbindung zwischen Kühlkörper und Kühlmittelverteiler die leicht herstellbar ist.

Die Lösung der Aufgabe erfolgt durch eine Vorrichtung zur Kühlung einer Fahrzeugbatterie mit Batteriezellen, umfassend einen Kühlkörper mit Kühlkanälen zur Durchströmung mit einem Kühlmittel, wobei der Kühlkörper mit den Batteriezellen in thermischem Kontakt steht, so dass Wärme von den Batteriezellen auf den Kühlkörper übertragbar ist, wobei an zumindest einem Ende des Kühlkörpers ein Kühlmittelverteiler vorgesehen ist, wobei zumindest einige der Kühlkanäle des Kühlkörpers in den Kühlmittelverteiler münden, wobei der Kühlmittelverteiler mit dem Kühlkörper verklebt ist.

Durch die Klebeverbindung zwischen Kühlkörper und Kühlmittelverteiler wird der Kühlmittelverteiler einerseits mechanisch am Kühlkörper befestigt und andererseits die Fluid-Schnittstelle zwischen Kühlmittelverteiler und Kühlkörper abgedichtet.

Weiterbildungen der Erfindung sind in den abhängigen Ansprüchen, der Beschreibung sowie den beigefügten Zeichnungen angegeben.

Bevorzugt weist der Kühlmittelverteiler Aufnahmebereiche auf, wobei die Aufnahmebereiche zur Klebe-Verbindung zwischen Kühlmittelverteiler und Kühlkörper ausgebildet sind. Insbesondere erfolgt die Verklebung ausschließlich in den Aufnahmebereichen des Kühlmittelverteilers. Der Klebstoff wird dadurch gezielt in dafür vorgesehenen Bereichen eingesetzt.

Bevorzugt sind die Aufnahmebereiche konkav ausgebildet und Klebstoff ist in den Aufnahmebereichen angebracht. Die konkaven Aufnahmebereiche des Kühlmittelverteilers dienen der Verbindung mit dem Kühlkörper und nehmen zusätzlich den Klebstoff zur Herstellung der Verbindung und zur Abdichtung auf.

Besonders bevorzugt umgreifen die Aufnahmebereiche des Kühlmittelverteilers Anschlussenden des Kühlkörpers. Am Kühlkörper sind also Anschlussenden ausgebildet, die in die Aufnahmebereiche des Kühlmittelverteilers hineinragen. Diese Anschlussenden werden von den Aufnahmebereichen des Kühlmittelverteilers umfasst.

Besonders bevorzugt werden die Anschlussenden des Kühlkörpers durch Begrenzungen der Kühlkanäle des Kühlkörpers gebildet. Die Kühlkanäle des Kühlkörpers müssen ohnehin durch Begrenzungen eingefasst sein, die das Kühlmittel umschließen. Diese Begrenzungen können so ausgebildet sein, dass sie als Anschlussenden und damit zur Verbindung des Kühlkörpers mit dem Kühlmittelverteiler geeignet sind.

Gemäß einer Ausgestaltung der Erfindung umgreifen die Aufnahmebereiche des Kühlmittelverteilers die Begrenzungen der Kühlkanäle sowohl von innen als auch von außen. "Innen" und "außen" heißt dabei, dass sowohl die dem Kühlmittel zugewandten Innenseiten der Begrenzungen der Kühlkanäle als auch dem Kühlmittel abgewandte Außenseiten der Begrenzungen der Kühlkanäle in den Aufnahmebereichen des Kühlmittelverteilers liegen und von diesen umfasst werden.

Vorzugsweise ist Klebstoff innerhalb der Aufnahmebereiche des Kühlmittelverteilers an der Innenseite und/oder der Außenseite und/oder der Stirnseite der Begrenzungen der Kühlkanäle des Kühlkörpers angebracht. Der Klebstoff liegt daher in einem Zwischenraum zwischen der Innenseite und/oder der Außenseite und/oder der dem Kühlmittelverteiler zugewandten Stirnseite der Begrenzung des Kühlkanals und dem jeweils gegenüberliegenden Abschnitt des Aufnahmebereiches.

Gemäß einer Ausführungsform weisen die Aufnahmebereiche des Kühlmittelverteilers Anschläge, zur Stirnseite der Begrenzungen der Kühlkanäle hin, auf. Die Anschläge dienen dazu den Kühlkörper in einer vorbestimmten Richtung auszurichten und zu positionieren.

Besonders bevorzugt weisen die Aufnahmebereiche des Kühlmittelverteilers Rippen zur Innenseite und/oder zur Außenseite der Begrenzungen der Kühlkanäle hin auf. Ein oder mehrere Rippen, die in verschiedenen Höhen des Kühlmittelverteilers ausgebildet sind, definieren so einen Abstand zwischen der Außen-/oder Innenseite des Kühlkörpers und der gegenüberliegenden Innen-/oder Außenseite des Kühlmittelverteilers. Hierdurch wird die Ausrichtung zwischen Kühlkörper und Kühlmittelverteiler vorbestimmt, die Struktur gestärkt und werden Hohlräume zur Einbringung von Klebstoff definiert.

Vorteilhaft besteht der Kühlmittelverteiler aus Kunststoff.

Weiters ist der Kühlmittelverteiler bevorzugt als Spritzgussteil ausgeführt.

Die Erfindung wird im Folgenden beispielhaft unter Bezugnahme auf die Zeichnungen beschrieben.
- Fig. 1: ist eine Schnittansicht einer erfindungsgemäßen Vorrichtung zur Kühlung einer Fahrzeugbatterie.
- Fig. 2: ist eine weitere Schnittansicht einer erfindungsgemäßen Vorrichtung zur Kühlung einer Fahrzeugbatterie.
- Fig. 3: ist eine weitere Schnittansicht einer erfindungsgemäßen Vorrichtung zur Kühlung einer Fahrzeugbatterie.
- Fig. 4: ist eine weitere Schnittansicht einer erfindungsgemäßen Vorrichtung zur Kühlung einer Fahrzeugbatterie.

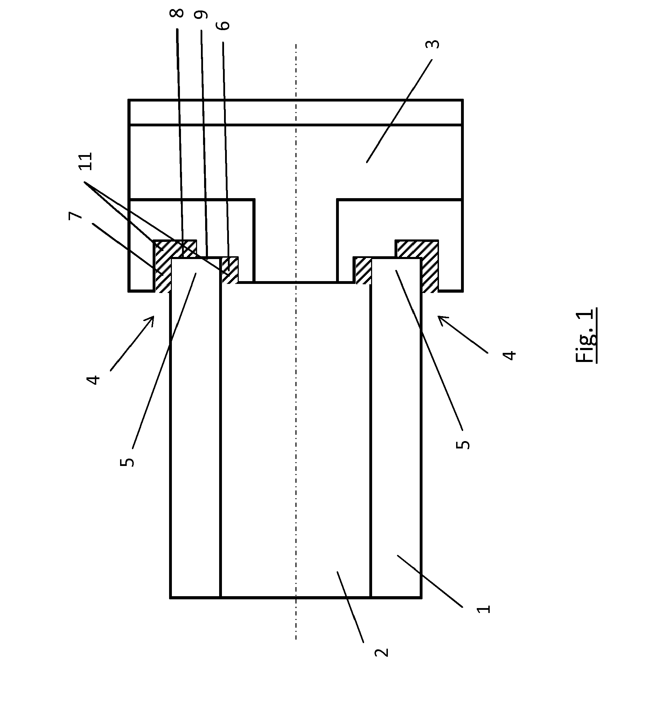

In den Fig. 1-4 ist eine erfindungsgemäße Vorrichtung zur Kühlung einer Fahrzeugbatterie in Schnittansicht dargestellt, umfassend einen Kühlkörper 1 dessen Kühlkanäle 2 von einem Kühlmittel durchströmbar sind. An zumindest einem Ende des Kühlkörpers 1 ist dieser mit einem Kühlmittelverteiler 3 verbunden, so dass das Kühlmittel zwischen dem Kühlkanal 2 des Kühlkörpers 1 und einem Kanal im Kühlmittelverteiler 3 strömen kann. Der Kühlmittelverteiler 3 umgreift dabei in den Aufnahmebereichen 4 Anschlussenden 5, die am Kühlkörper 1 ausgebildet sind. Die Anschlussenden 5 werden durch Begrenzungen, also Ränder des Kühlkanals 2 gebildet. Die Anschlussenden 5 werden sowohl von innen als auch von außen im Aufnahmebereich 4 vom Kühlmittelverteiler 3 umfasst. Jeweils zwischen den Begrenzungen des Kühlkanals 2 und dem Kühlmittelverteiler 3 sind innenseitig 6, außenseitig 7 und/oder stirnseitig 8 Klebeflächen für Klebstoff 11 vorgesehen. Die Klebeflächen sind in den Figuren jeweils quer-gestreift dargestellt. Weiters ist ein definierter Anschlag 9 zwischen Kühlkörper-Stirnseite 8 und Kühlmittelverteiler 3 vorgesehen um den Kühlkörper 1 richtig zu positionieren und auszurichten.

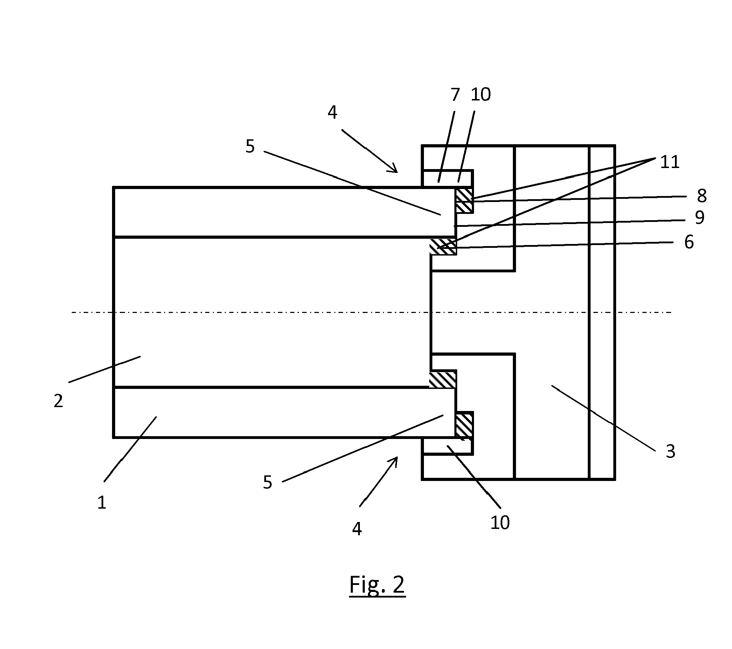

In der Fig. 2 ist eine von der Fig. 1 verschiedene Ausführungsform oder die selbe Ausführungsform der Fig. 1 jedoch in einer anderen Schnitthöhe dargestellt. Es sind Rippen 10, jeweils zur Außenseite der Begrenzungen des Kühlkanals 7 hin, am Kühlmittelverteiler 3 ausgebildet. Durch die Rippen 10 wird ein vorbestimmter Abstand zwischen der Außenseite des Kühlkörpers 7 und einer Innenfläche des Kühlmittelverteilers 3 definiert. Es verbleibt dabei ein bestimmter Abstand zwischen den Rippen 10, so dass die Hohlräume mit Klebstoff 11 ausgefüllt werden können. Der Klebstoff 11 kann auf diese Weise Kräfte die auf Grund des Druckes vorherrschen besonders gut aufnehmen, insbesondere da der Klebstoff 11 auf Scherung beansprucht wird. An der Innenfläche des Kühlmittelverteilers 3 können entlang verschiedener Schnitthöhen mehrere derartige Rippen 10 ausgebildet sein. Jeweils zwischen den Rippen 10 bzw. außerhalb der Rippen 10 wird der Klebstoff 11 angebracht.

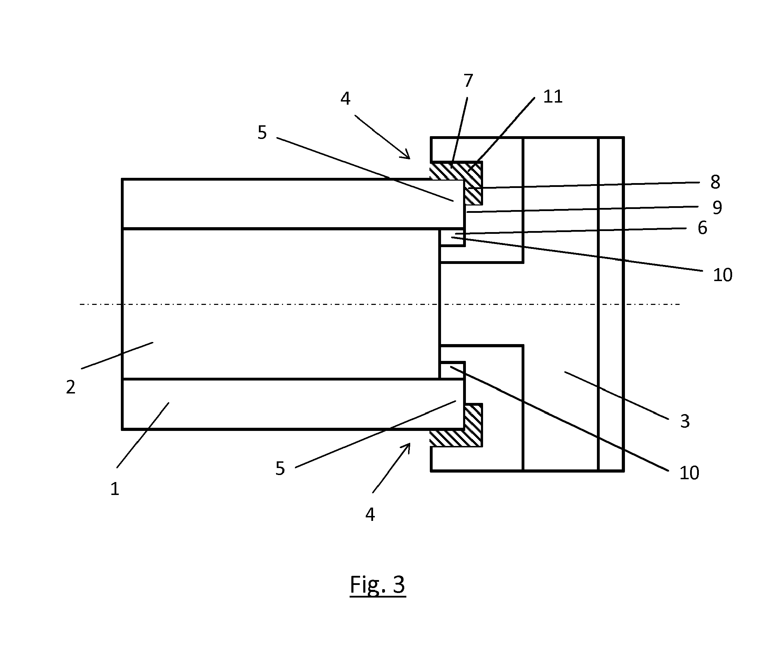

In ähnlicher Weise zeigt die Fig. 3 eine weitere verschiedene Ausführungsform oder aber die selbe Ausführungsform der Fig. 1 und/oder der Fig. 2 in einer anderen Schnitthöhe dargestellt. Die Rippen 10 sind in dieser Höhe in Richtung zur Innenseite der Begrenzungen des Kühlkanals 6 an einer Außenfläche des Kühlmittelverteilers 3 ausgebildet. Es können, wie zur Fig. 2 beschrieben, mehrere Rippen 10 in verschiedenen Höhen angeordnet sein, so dass jeweils die Zwischenräume der Rippen 10 mit Klebstoff 11 ausgefüllt sind.

Die außenseitigen und innenseitigen Rippen 10 entsprechend der Fig. 2 und Fig. 3 können in einer weiteren Ausführungsform natürlich auch auf selber Schnitthöhe angeordnet sein.

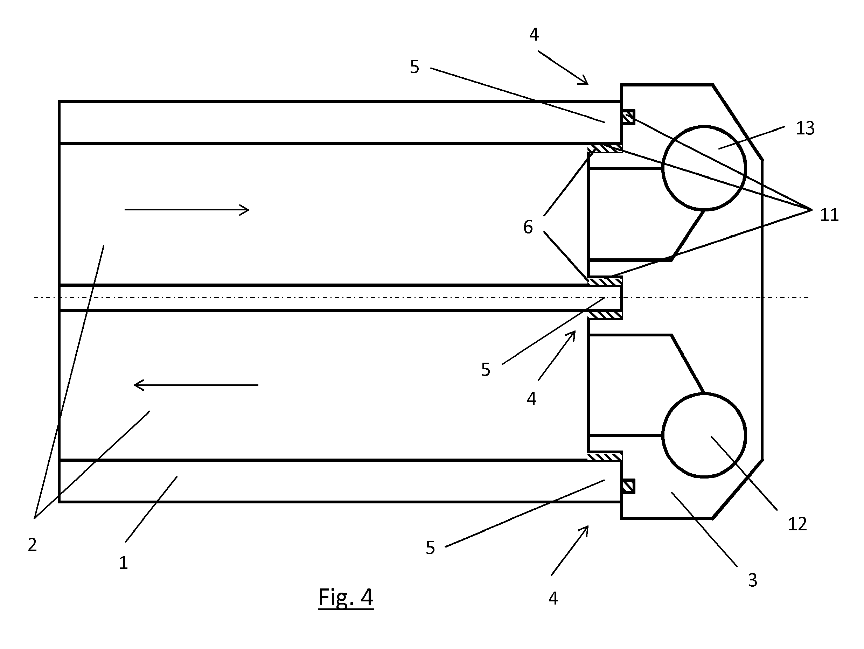

Fig. 4 zeigt eine weitere Schnittansicht einer erfindungsgemäßen Verbindung zwischen einem Kühlkörper 1 und einem Kühlmittelverteiler 3. Der Kühlkörper 1 weist 2 Kühlkanäle 2 auf. Ein Vorlauf 12 und ein Rücklauf 13 des Kühlmittelverteilers 3, die jeweils mit einem Kühlkanal 2 des Kühlkörpers 1 fluidleitend verbunden sind, sind dargestellt. An den Innenseiten der Begrenzungen der Kühlkanäle 6 ist Klebstoff 11 angeordnet. Zusätzlich sind teilweise Klebeflächen an den Stirnseiten der Begrenzungen der Kühlkanäle 8 vorgesehen, wobei der Klebstoff 11 vorzugsweise in einer umlaufenden Nut des Kühlmittelverteilers 3 angeordnet ist.

Die Erfindung gibt somit eine Vorrichtung zur Kühlung einer Fahrzeugbatterie mit einer fluiddichten Verbindung zwischen einem Kühlkörper und einem Kühlmittelverteiler an, die leicht herstellbar ist.

### Bezugszeichenliste

- 1: Kühlkörper
- 2: Kühlkanal
- 3: Kühlmittelverteiler
- 4: Aufnahmebereich
- 5: Anschlussende
- 6: Innenseite der Begrenzung des Kühlkanals
- 7: Außenseite der Begrenzung des Kühlkanals
- 8: Stirnseite der Begrenzung des Kühlkanals
- 9: Anschlag
- 10: Rippe
- 11: Klebstoff
- 12: Vorlauf Kühlmittelverteiler
- 13: Rücklauf Kühlmittelverteiler

## Patentansprüche

1. Vorrichtung zur Kühlung einer Fahrzeugbatterie mit Batteriezellen, umfassend einen Kühlkörper (1) mit Kühlkanälen (2) zur Durchströmung mit einem Kühlmittel, wobei der Kühlkörper (1) mit den Batteriezellen in thermischem Kontakt steht, so dass Wärme von den Batteriezellen auf den Kühlkörper (1) übertragbar ist, wobei an zumindest einem Ende des Kühlkörpers (1) ein Kühlmittelverteiler (3) vorgesehen ist, wobei zumindest einige der Kühlkanäle (2) des Kühlkörpers (1) in den Kühlmittelverteiler (3) münden, **dadurch gekennzeichnet, dass** der Kühlmittelverteiler (3) mit dem Kühlkörper (1) verklebt ist.

2. Vorrichtung zur Kühlung einer Fahrzeugbatterie mit Batteriezellen nach Anspruch 1,
**dadurch gekennzeichnet, dass** der Kühlmittelverteiler (3) Aufnahmebereiche (4) aufweist, wobei die Aufnahmebereiche (4) zur Klebe-Verbindung zwischen Kühlmittelverteiler (3) und Kühlkörper (1) ausgebildet sind.

3. Vorrichtung zur Kühlung einer Fahrzeugbatterie mit Batteriezellen nach Anspruch 2,
**dadurch gekennzeichnet, dass** die Aufnahmebereiche (4) konkav ausgebildet sind und in den Aufnahmebereichen (4) Klebstoff (11) angebracht ist.

4. Vorrichtung zur Kühlung einer Fahrzeugbatterie mit Batteriezellen nach Anspruch 2,
**dadurch gekennzeichnet, dass** die Aufnahmebereiche (4) des Kühlmittelverteilers (3) Anschlussenden (5) des Kühlkörpers (1) umgreifen.

5. Vorrichtung zur Kühlung einer Fahrzeugbatterie mit Batteriezellen nach Anspruch 4,
**dadurch gekennzeichnet, dass** die Anschlussenden (5) des Kühlkörpers (1) durch Begrenzungen der Kühlkanäle (2) des Kühlkörpers (1) gebildet werden.

6. Vorrichtung zur Kühlung einer Fahrzeugbatterie mit Batteriezellen nach Anspruch 5,
**dadurch gekennzeichnet, dass** die Auf nahmebereiche (4) des Kühlmittelverteilers (3) die Begrenzungen der Kühlkanäle (2) sowohl von innen als auch von außen umgreifen.

7. Vorrichtung zur Kühlung einer Fahrzeugbatterie mit Batteriezellen nach Anspruch 5,
**dadurch gekennzeichnet, dass** Klebstoff (11) innerhalb der Aufnahmebereiche (4) des Kühlmittelverteilers (3) an der Innenseite (6) und/oder der Außenseite (7) und/oder der Stirnseite (8) der Begrenzungen der Kühlkanäle (2) des Kühlkörpers (1) angebracht ist.

8. Vorrichtung zur Kühlung einer Fahrzeugbatterie mit Batteriezellen nach Anspruch 5,
**dadurch gekennzeichnet, dass** die Auf nahmebereiche (4) des Kühlmittelverteilers (3) Anschläge (9) zur Stirnseite (8) der Begrenzungen der Kühlkanäle (2) hin aufweisen.

9. Vorrichtung zur Kühlung einer Fahrzeugbatterie mit Batteriezellen nach Anspruch 5,
**dadurch gekennzeichnet, dass** die Auf nahmebereiche (4) des Kühlmittelverteilers (3) Rippen (10) zur Innenseite (6) und/oder zur Außenseite (7) der Begrenzungen der Kühlkanäle (2) hin aufweisen.

10. Vorrichtung zur Kühlung einer Fahrzeugbatterie mit Batteriezellen nach Anspruch 1,
**dadurch gekennzeichnet, dass** der Kühlmittelverteiler (3) aus Kunststoff besteht.

11. Vorrichtung zur Kühlung einer Fahrzeugbatterie mit Batteriezellen nach Anspruch 1,
**dadurch gekennzeichnet, dass** der Kühlmittelverteiler (3) als Spritzgussteil ausgeführt ist.
